(19) Europäisches Patentamt
European Patent Office
Office européen des brevets

(11) **EP 2 955 554 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(51) Int Cl.:
*G02B 6/00* (2006.01)   *F21V 8/00* (2006.01)
*F21S 41/24* (2018.01)   *F21S 43/237* (2018.01)
*F21S 43/245* (2018.01)

(21) Anmeldenummer: **15171348.4**

(22) Anmeldetag: **10.06.2015**

(54) **BELEUCHTUNGSVORRICHTUNG FÜR EIN FAHRZEUG**

ILLUMINATION DEVICE FOR A VEHICLE

DISPOSITIF D'ECLAIRAGE POUR UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014 AT 504022014**

(43) Veröffentlichungstag der Anmeldung:
**16.12.2015 Patentblatt 2015/51**

(73) Patentinhaber: **ZKW Group GmbH
3250 Wieselburg (AT)**

(72) Erfinder: **Faffelberger, Anton
3375 Krummnußbaum (AT)**

(74) Vertreter: **Patentanwaltskanzlei
Matschnig & Forsthuber OG
Biberstraße 22
Postfach 36
1010 Wien (AT)**

(56) Entgegenhaltungen:
**EP-A1- 2 362 250      DE-A1- 10 153 543
US-A1- 2007 159 846   US-A1- 2012 069 579
US-A1- 2014 056 015**

**Beschreibung**

Die Erfindung betrifft eine Beleuchtungsvorrichtung für ein Fahrzeug, insbesondere für ein Kraftfahrzeug, umfassend zumindest eine Lichtquelle und zumindest eine der zumindest einen Lichtquelle zugeordnete Lichtleiteranordnung zur Führung des von der zumindest einen Lichtquelle abgestrahlten und in die Lichtleiteranordnung eingekoppelten Lichts, wobei in der Lichtleiteranordnung ein oder mehrere Auskopplungsstellen zur Auskoppelung zumindest eines Teils des eingekoppelten Lichtes vorgesehen sind, und wobei zur Umlenkung des eingekoppelten Lichtes zu der einen oder den mehreren Auskopplungsstellen der Lichtleiteranordnung eine Umlenkeinrichtung zugeordnet ist, welche Umlenkeinrichtung das in einer Haupt-Lichteinspeisrichtung eingekoppelte Licht durch Reflexion an zumindest einer Reflexionsfläche der Umlenkeinrichtung in zumindest eine Haupt-Lichtumlenkrichtung umlenkt.

Weiters betrifft die Erfindung einen Kraftfahrzeugscheinwerfer mit zumindest einer solchen Beleuchtungsvorrichtung.

Schließlich betrifft die Erfindung noch ein Kraftfahrzeug mit zumindest einem solchen Kraftfahrzeugscheinwerfer.

Grundsätzlich besteht eine solche Lichtleiteranordnung aus einem oder mehreren miteinander verbundenen Lichtleitern, beispielsweise aus einem "Leuchtring", d.h. einem Lichtleiter, der zu einem Ring, z.B. einem kreisförmigen oder anders gestalteten, beispielsweise geschlossenen Ring geformt ist. Der Lichtleiter muss aber nicht in sich geschlossen sein, es sind z.B. auch eine U-Form oder andere, im Grunde beliebige Formen möglich. In diesen Lichtleiter wird über eine Lichtzuleitung Licht eingespeist. Dabei kommt das eingespeiste Licht zumeist aus einer Richtung, welche nicht der Lichtausbreitungsrichtung im Lichtleiter entspricht. Entsprechend ist in einem Einspeisbereich eine Umlenkeinrichtung vorgesehen, an welcher das eingespeiste Licht umgelenkt, z.B. reflektiert wird, sodass es in den Lichtleiter eingespeist wird und sich in diesem in Richtung des Lichtleiters fortpflanzt. Häufig ist dabei vorgesehen, dass - beispielsweise, aber nicht ausschließlich bei einem kreisförmigen Lichtleiter - das eingespeiste Licht in zwei, z.B. entgegengesetzte Richtung, umgelenkt wird. Der Lichtleiter weist also zwei Lichtleiterabschnitte auf, in welche das Licht mit der Umlenkeinrichtung eingespeist wird.

Eine solche Lichtleiteranordnung ist beispielsweise aus der DE 101 58 336 B4 bekannt, bei welcher die beiden Reflexionsflächen der Umlenkeinrichtung als plane Flächen ausgebildet sind.

Eine weitere derartige Lichtleiteranordnung ist aus der US2007/0159846 bekannt.

Ein Problem, das bei einer eingangs genannten Beleuchtungsvorrichtung in nachteiliger Weise noch auftritt ist jenes, dass bei einer Ansicht der Vorderseite der Lichtleiteranordnung im Bereich der Umlenkeinrichtung ein abgedunkelter Bereich erscheint, welcher einen optisch unschönen Eindruck hinterlässt.

Es ist eine Aufgabe, solche abgedunkelten/ dunklen Bereich zu beseitigen und eine möglichst homogene Ausleuchtung der Lichtleiteranordnung zu schaffen.

Diese Aufgabe wird mit einer eingangs erwähnten Beleuchtungsvorrichtung dadurch gelöst, dass erfindungsgemäß die Umlenkeinrichtung zumindest eine Licht nach vorne, d.h. in Richtung der Licht-Auskoppelrichtung umlenkende Struktur aufweist.

Mit einer solchen Licht umlenkenden Struktur kann Licht derart umgelenkt werden, dass es aus jenen Bereichen austritt, welche ursprünglich dunkler erscheinen, sodass diese somit heller erscheinen.

Vorzugsweise ist die zumindest eine Licht umlenkende Struktur aus einer Oberfläche gebildet, welche zumindest eine, vorzugsweise zwei oder mehrere Längsrillen aufweist.

An den Längsrillen weist die Normalenrichtung periodisch in unterschiedliche Richtungen, dadurch pendeln die Ausbreitungsrichtungen des austretenden Lichtes um die Licht-Auskoppelrichtung derart, dass der dunkle Fleck im Bereich der Umlenkeinrichtung aufgehellt wird. Von Vorteil ist es dabei, wenn bei zwei oder mehr Längsrillen diese parallel zueinander verlaufen.

Beispielsweise verlaufen die zumindest eine bzw. die zwei oder mehreren Längsrillen parallel zu einer Ebene, welche normal auf die Licht-Auskoppelrichtung steht bzw. welche parallel ist zu einer Ebene, welche aufgespannt wird von der Haupt-Lichteinspeisrichtung und der Haupt-Lichtumlenkrichtung.

Die Hauptabstrahlrichtung (=Auskoppelrichtung) steht normal auf eine Ebene des Lichtleiters, die durch die Haupt-Lichteinspeisrichtung und die Haupt-Lichtumlenkeinrichtung aufgespannt wird.

Vorzugsweise ist vorgesehen, dass die Längsrillen normal zu der Haupt-Lichteinspeisrichtung und/oder in Richtung der Haupt-Lichtumlenkrichtung verlaufen.

Ein Verlauf in Richtung der Haupt-Lichtumlenkrichtung liegt dann vor, wenn die Zuleitung 3 und der (oder die) Lichtleiter 4 der Lichtleitanordnung unter 90° zueinander verlaufen.

Die Haupt-Lichtumlenkrichtung muss aber nicht zwingender Weise normal zu der Haupt-Lichteinspeisrichtung verlaufen sondern kann auch andere Winkel zu dieser einschließen. Die Längsrillen-Richtung ist daher im allgemeinsten Fall normal zur Haupt-Lichteinspeisrichtung.

Die Hauptabstrahlrichtung ist in der Regel immer gerade nach vorne, bezogen auf die Fahrzeug-Fahrtrichtung, gerichtet, d.h. im Wesentlichen parallel zur Fahrtrichtung. Diese Richtung kann, muss aber nicht notwendigerweise mit dem Normalenvektor jener Ebene zusammenfallen, die von der Haupt-Lichteinspeisrichtung und der Haupt-Lichtumlenkrichtung aufgespannt wird, allerdings bilden bei einer bevorzugten Ausführungsform die drei Vektoren ein orthogonales Dreibein.

Weiters kann vorgesehen sein, dass die Längsrillen in Richtung des Lichtleiters im Bereich des Lichteinspeisbereiches verlaufen.

Beispielsweise ist vorgesehen, dass die Oberfläche eine rückwärtige, dem zumindest einen Lichtauskoppelbereich abgewandte Begrenzungsfläche des zumindest einen Lichtleiters im Bereich der Umlenkeinrichtung ist.

Dabei kann vorgesehen sein, dass eine die Rillen einhüllende, gedachte Fläche nach Vorne, in Richtung der zumindest einen Lichtauskoppelstelle gekrümmt ist, und wobei beispielsweise die Kontur der einhüllenden Fläche in Vertikalschnitten, z.B. in Vertikalschnitten normal auf die Licht-Umlenkrichtung einen Teilkreis darstellt.

Weiters ist vorzugsweise vorgesehen, dass die zumindest eine bzw. die zwei oder mehreren Rillen als Vertiefungen in der Oberfläche ausgebildet sind.

Dabei ist z.B. vorgesehen, dass eine eine Rille bildende Vertiefung jeweils von zwei Erhebungen, welche sich von der Lichtauskoppelstelle weggerichtet erheben, begrenzt ist.

Insbesondere kann dabei vorgesehen sein, dass die Erhebungen in Schnitten, welche in einer Ebene verlaufen, welche normal auf Haupt-Lichtumlenkrichtung bzw. auf die Längsachse des Lichtleiters im Bereich der Lichteinkoppelstelle steht, die Kontur eines Teilkreises bilden, wobei sich benachbarte Teilkreise in der gedachten Fläche schneiden.

Bei einer konkreten Ausführungsform ist vorgesehen, dass der Krümmungsradius der Teilkreise in einem Bereich von 0,25 mm bis 0,75 mm liegt, beispielsweise 0,5 mm beträgt.

Die Trägerfläche der Längsrillen ist eine Offsetfläche der äußeren vorderen Begrenzung des Lichtleiters; der Abstand der Offsetfläche zu der vorderen Begrenzungsfläche sollte vorzugsweise gering sein und entspricht vorzugsweise einer typischen Wandstärke von etwa 1,0 mm. Die Längsrillen sind einfache Zylinderoberflächen, die Radien dieser Zylinder können dem Wertebereich 0,25 mm bis 0,75 mm entstammen und diese bilden die Längsrillen. Im Prinzip sind auch andere konvexe (bezogen auf eine Betrachtung von hinten in die Öffnung hinein) Kurvenverläufe möglich, diese müssen nur das von unten eingespeiste Licht nach vorne auf die Straße umlenken. Die Auswahl eines Kreisbogens ist optisch und fertigungstechnisch besonders gut zu beherrschen und erlaubt eine einfache Berechnung und Fertigung.

Der Sehnenlänge eines Teilkreises (Kreisbogens) kann zwischen beispielsweise zwischen 65% und 85% des Zylinderdurchmessers betragen.

Beispielsweise lässt sich der "Radius" der Einhüllenden, konkret der Abstand E der Einhüllenden von der Trägerkurve als Funktion des Durchmessers D der zylinderischen Flächen wie folgt darstellen:

$$E = (4\,D)/(4 + k^2) \qquad \text{mit } 4 < k < 5$$

Weiters kann es zweckmäßig sein, wenn sich die zumindest eine Rille bei einer Umlenkeinrichtung, welche zwei Reflexionsflächen zur Umlenkung des eingekoppelten Lichtes, vorzugsweise in zwei im Wesentlichen entgegengesetzte Richtungen, aufweist, von einer Reflexionsfläche bis zu der anderen Reflexionsfläche erstreckt.

Vorzugsweise ist dabei vorgesehen, dass sich die die zumindest eine Rille aufweisende Oberfläche von der einen Reflexionsfläche bis zu der anderen Reflexionsfläche erstreckt.

Damit kann quasi die gesamte "Lücke" im Lichtleiter zwischen den beiden Reflexionsflächen nach vorne geschlossen werden und Licht in diesem Bereich nach Vorne abgestrahlt werden.

Üblicherweise ist gewünscht, dass der Lichtleiter bei frontaler Betrachtung möglichst homogen, also über die gesamte Länge möglichst gleichmäßig stark leuchtend erscheint. Allerdings tritt häufig weiters noch das Problem von Leuchtdichteschwankungen, insbesondere in einem Bereich unmittelbar an den Umlenk- bzw. Einspeisbereich anschließend auf, wo sich anschließend an den Umlenkbereich in dem oder den Lichtleiterabschnitten hellere Bereiche, sogenannte "Hot-Spots" bilden, die visuelle gut erkennbar sind. Anschließend "beruhigt" sich die Lichtverteilung, d.h. der Lichtleiter bzw. die Lichtleiterabschnitte erscheinen wieder homogen.

Um eine oben beschriebene Lichtleiteranordnung dahingehend zu verbessern, dass der Lichtleiters insbesondere im Bereich der Umlenkeinrichtung einen homogenen Leuchteindruck aufweist, kann weiters noch vorgesehen sein, dass die zumindest eine Reflexionsfläche zumindest zwei Reflexions-Teilflächen umfasst, wobei parallele Lichtstrahlen eines auf die Reflexionsfläche auftreffenden Lichtbündels, zumindest in einer Projektion in eine Ausbreitungs-Ebene, welche aufgespannt wird von der Haupt-Lichteinspeisrichtung und der dem zumindest einen Reflexionsfläche zugehörigen Haupt-Lichtumlenkrichtung,

- in einer oder mehreren ersten Reflexions-Teilflächen divergent reflektiert werden und

- in einer oder mehreren zweiten Reflexions-Teilflächen konvergent reflektiert werden.

"Konvergent" bedeutet dabei, dass reflektierte Lichtstrahlen aus einer zusammenhängenden Reflexions-Teilfläche so reflektiert werden, dass sie sich überkreuzen. Das Überkreuzen kann, muss aber nicht in einem gemeinsamen Punkt erfolgen. "Divergent" bedeutet, dass reflektierte Lichtstrahlen aus einer zusammenhängenden Reflexions-Teilfläche so reflektiert werden, dass sie sich nicht überkreuzen und vorzugsweise voneinander entfernen, also auseinander laufen.

Durch die erfindungsgemäße Ausgestaltung der zumindest einen Reflexionsfläche der Umlenkeinrichtung wird Durchmischung des in den Lichtleiter eingekoppelten Lichtes erreicht. Dies führt zu einem homogenisierten Leuchteindruck, und die beobachteten Hotspots großer Leuchtdichten im Nahbereich der Umlenkeinrichtung verschwinden. Die Ausformungen der im Stand der Technik angeführten Strahlteiler (Umlenkeinrichtungen) besitzen plane Grenzflächen, die Mantelflächen von Pyramiden bzw. Kegeln ausgeführt sind.

Bevorzugt ist vorgesehen, dass die Reflexions-Teilflächen derart angeordnet und/oder ausgebildet sind, dass konvergente und divergente Abstrahlrichtungen der reflektierten Strahlen abwechselnd auftreten und vorzugsweise periodisch variieren.

Dies wird bevorzugt dadurch erreicht, dass jeweils ein erster und ein zweiten Reflexions-Teilbereich unmittelbar aneinander angrenzen bzw. ineinander übergehen.

Damit kann eine bessere Durchmischung der reflektierten Strahlen erreicht werden, als wenn Reflexions-Teilflächen mit identischer Reflexionscharakteristik aneinander angrenzen.

Im Sinne einer gleichmäßigen Durchmischung ist es auch, wenn benachbarte Reflexions-Teilbereiche stetig ineinander übergehen.

In diesem Sinne ist es auch von Vorteil, wenn die Reflexions-Teilbereiche einen stetigen Verlauf aufweisen. Vorzugsweise weisen die Reflexions-Teilbereiche eine C1- Stetigkeit auf, insbesondere auch in dem Bereich, in dem zwei aneinander grenzende Reflexions-Teilbereiche ineinander übergehen, sodass die Normalvektoren an den Rändern an den Reflexions-Teilbereichen bzw. von Teilkurven (welche sich durch einen Schnitt durch die Reflexions-Teilbereiche ergeben) idente Ausrichtung besitzen.

Bei einer konkreten, bevorzugten Ausführungsform ist vorgesehen, dass die zumindest eine Reflexionsfläche eine wellenförmige Struktur aufweist bzw. durch eine wellenförmige Struktur gebildet ist.

Unter Umständen abhängig von der der jeweiligen Einstrahlrichtung des Lichtbündels paralleler Strahlen erfolgt im Bereich der Vertiefungen eine konvergente Reflexion, im Bereich der Erhebungen eine divergente Reflexion. Der Punkt, an welchem der Übergang zwischen divergent und konvergent erfolgt, kann abhängig von der Ausrichtung des Lichtbündels paralleler Strahlen "wandern".

Vorzugsweise ist vorgesehen, dass sich die wellenförmige Struktur der zumindest einen Reflexionsfläche von einem Licht-Einspeisbereich, über welchen Licht der zumindest einen Lichtquelle in zumindest einen Lichtleiter der Lichtleiteranordnung eingespeist wird, weg ausbreitet.

Die "Ausbreitungsrichtung" der wellenförmigen Struktur bzw. der Strukturen ist also (jeweils) in den Lichtleiter hinein gerichtet.

Bei einer konkreten Ausführungsform ist vorgesehen, dass die Ausbreitungsrichtung der wellenförmigen Struktur parallel zu einer Ausbreitungs-Ebene verläuft, welche Ausbreitungs-Ebene aufgespannt wird von der Haupt-Lichteinspeisrichtung und der Haupt-Lichtumlenkrichtung.

Dabei ist üblicherweise vorgesehen, dass die Ausbreitungs-Ebene eine Vertikalebene ist, welche normal auf die Haupt-Lichtauskoppelrichtung steht.

Vorzugsweise ist vorgesehen, dass die wellenförmige Struktur in zueinander parallelen Schnittebenen, vorzugsweise über die gesamte zumindest eine Reflexionsfläche, einen identischen Verlauf aufweist.

Es handelt es somit bei dieser Ausführungsform um sogenannte "Zylinderwellen", d.h. in beliebigen parallelen Schnitten durch die Reflexionsfläche, vorzugsweise über die gesamte Erstreckung der Reflexionsfläche in einer Richtung normal auf die Schnittebenen haben die Wellen denselben Verlauf

Beispielsweise liegen die Schnittebenen parallel zu der Ausbreitungs-Ebene, sodass die Wellen über die gesamte "Breite" der Umlenkeinrichtung denselben Verlauf aufweisen.

Weiters ist vorzugsweise vorgesehen, dass der Wert der Amplituden der wellenförmigen Struktur in Bezug auf eine Trägerkurve, wobei die Trägerkurven jeweils in den parallelen Schnittebenen liegen, über die gesamte wellenförmige Struktur, d.h. entlang der gesamten Trägerkurve konstant sind.

In einem betrachteten Schnitt sind die Amplituden, also die maximale Auslenkung bzw. der maximale Normalabstand zu der jeweiligen Trägerkurve somit konstant.

Beispielsweise kann das bedeuten, dass in allen Schnittebenen die Amplituden gleich groß sind.

Beispielsweise beträgt der Wert der Amplituden 0,05 mm.

Weiters ist es zweckmäßig, wenn die Wellenlänge der wellenförmigen Struktur über die gesamte Trägerkurve konstant ist.

Beispielsweise liegt die Wellenlänge der wellenförmigen Struktur in einem Bereich von 0,25 mm bis 1,5 mm, beispielsweise bei 1 mm.

Vorzugsweise weist die Wellenstruktur eine periodische Struktur auf, sodass auch die Reflexionsrichtung der reflektierten Strahlen periodisch variiert wird.

Beispielsweise folgt der Verlauf der Wellenstruktur, betrachtet man diese in einem Schnitt, also entlang einer Trägerkurve einer der folgenden Funktionen:

$$F_n(x) = A_n * \sin^n(x), \text{ mit } n = 1, 2, 3, ...,$$

oder

$$F_m(x) = A_m * \cos^m(x), \text{ mit } m = 1, 2, 3,$$

wobei x die Punkte entlang der Trägerkurve bezeichnet.

Zusätzlich oder alternativ ist die Wellenstruktur stetig, d.h. die von der Wellenstruktur gebildet, reflektierende und streuende Reflexionsfläche ist stetig und bildet eine reguläre Fläche (C1-stetig).

Beispielsweise gilt für das Verhältnis Amplitude/Wellenlänge ≤ 0,05.

Bei einer Ausführungsform sind die Trägerkurven Geraden.

Das ist der Fall, wenn die - unmodifizierte Reflexionsfläche, d.h. die Reflexionsfläche ohne wellenförmige Struktur - eben ausgebildet ist.

Bei einer bevorzugten Ausführungsform ist die Trägerkurve gekrümmt, vorzugsweise konvex gekrümmt ausgebildet.

Besonders bevorzugt ist es, wenn die Trägerkurven Parabeln sind.

Es sind auch Freiformkurven denkbar, deren Annäherung mittels Parabeln höherer gerader Ordnung wie folgt beschrieben werden kann: $f(x) = \sum a_n x^n$, mit n = 2, 4, 8, ... (n = gerade natürliche Zahl).

Weiters ist es günstig, wenn der Brennpunkt einer Parabel, vorzugsweise aller Parabeln in etwa im Bereich der Unterseite des zumindest einen Lichtleiters der Lichtleiteranordnung liegt.

Insbesondere ist vorgesehen, dass der Brennpunkt einer oder mehrerer, vorzugsweise aller Parabeln von einer Längsmittelebene des in den zumindest einen Lichtleiter mündenden Zuleitungsabschnittes einen Normalabstand von ca. 45% des Radius des Zuleitungsabschnittes aufweist.

Die Längsmittelebene ist dabei jene Ebene, welche durch die Längsachse des Zuleitungsabschnittes verläuft und normal auf die Haupt-Lichtumlenkrichtung steht.

Im Falle eines elliptischen, eckigen oder generell anders als kreisrund geformten Querschnittes des Zuleitungsabschnittes ist unter "Durchmesser" die Erstreckung des Zuleitungsabschnittes parallel zu Haupt-Lichtumlenkeinrichtung zu verstehen.

Bei einer konkreten Ausführungsform ist vorgesehen, dass die Brennweite einer oder mehrerer, vorzugsweise aller Parabeln ca. 55% des Radius des-Zuleitungsabschnittes beträgt.

Schließlich kann bei einer Ausführungsform noch vorgesehen sein, dass die Einhüllende der Amplituden der Wellenstruktur die Form einer gedämpften Schwingung aufweist, wobei vorzugsweise dem Licht-Einspeisbereich nächstgelegene Amplitude die maximale Amplitude ist.

Generell ist mit Vorteil vorgesehen, dass die Umlenkeinrichtung zwei Reflexionsflächen zur Umlenkung des eingekoppelten Lichtes, vorzugsweise in zwei im Wesentlichen entgegengesetzte Richtungen, aufweist.

Vorzugsweise ergibt sich eine der Reflexionsflächen durch Spiegelung der anderen Reflexionsfläche an einer Längsmittelebene des Zuleitungsabschnittes und somit eine symmetrische Ausgestaltung der Umlenkeinrichtung.

Bei einer Ausführungsform ist die Umlenkeinrichtung als Höhlung in dem Lichtleiter ausgebildet bzw. von einer solchen Höhlung gebildet.

Es kann auch vorgesehen sein, dass die Umlenkeinrichtung als Ausnehmung in dem Lichtleiter ausgebildet ist.

Bei einer konkreten Ausführungsform ist vorgesehen, dass der Zuleitungsabschnitt von unten in den Lichtleiter mündet.

Im Folgenden ist die Erfindung an Hand der Zeichnung näher erläutert. In dieser zeigt

Fig. 1 eine Lichtleiteranordnung in einer Ansicht von Vorne,

Fig. 2 eine Lichtleiteranordnung in einer Ansicht von Hinten,

Fig. 3 eine erfindungsgemäße Lichtleiteranordnung im Bereich einer Umlenkeinrichtung,

Fig. 4 einen Schnitt durch die Lichtleiteranordnung gemäß Figur 3 entlang der Ebene A-A,

Fig. 5 einen perspektivische Ansicht einer Lichtleiteranordnung aus Figur 3 von schräg Hinten, geschnitten Entlang der Ebene A-A,

Fig. 6 eine perspektivische Ansicht der Lichtleiteranordnung aus Figur 3 in einer perspektivischen Ansicht von schräg hinten im Bereich der Umlenkeinrichtung,

Fig. 7a einen schematischen, exemplarischen Strahlenverlauf im Bereich einer aus dem Stand der Technik bekannten Umlenkeinrichtung,

Fig. 7b einen schematischen, exemplarischen Strahlenverlauf im Bereich einer erfindungsgemäßen Umlenkeinrichtung,

Fig. 8a den Strahlenverlauf eines Lichtbündels paralleler Strahlen vor und nach der Reflexion an einer herkömmlichen Reflexionsfläche einer Umlenkeinrichtung in einem Schnitt,

Fig. 8b den Strahlenverlauf des Lichtbündels paralleler Strahlen aus Figur 8a vor und nach der Reflexion an einer erfindungsgemäßen Reflexionsfläche einer Umlenkeinrichtung in einem Schnitt,

Fig. 9a den Strahlenverlauf eines weiteren Lichtbündels paralleler Strahlen vor und nach der Reflexion an einer herkömmlichen Reflexionsfläche entsprechend Figur 8a,

Fig. 9b den Strahlenverlauf des Lichtbündels paralleler Strahlen aus Figur 9a vor und nach der Reflexion an einer erfindungsgemäßen Reflexionsfläche entsprechend Figur 8b, und

Fig. 10a den Strahlenverlauf eines noch weiteren Lichtbündels paralleler Strahlen vor und nach der Reflexion an einer herkömmlichen Reflexionsfläche entsprechend Figur 8a, und

Fig. 10b den Strahlenverlauf des Lichtbündels paralleler Strahlen aus Figur 10a vor und nach der Reflexion an einer erfindungsgemäßen Reflexionsfläche entsprechend Figur 8b.

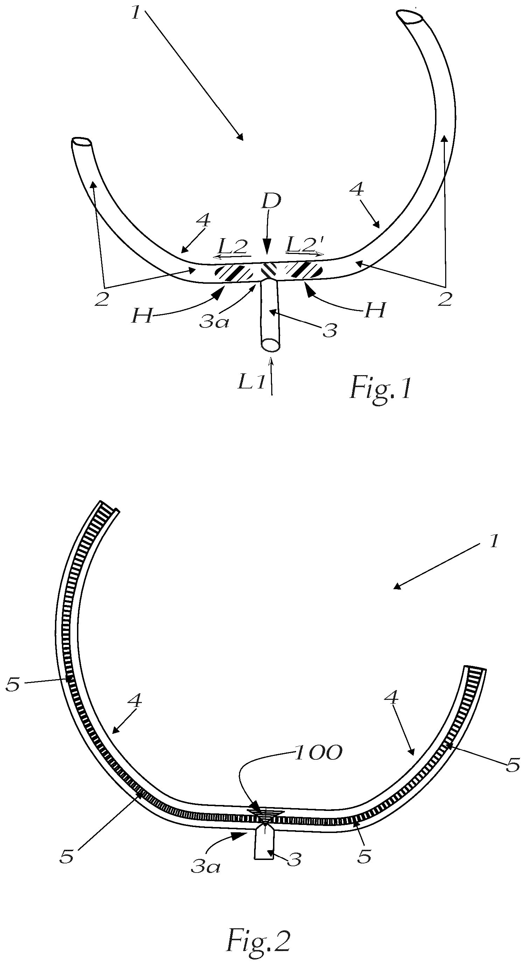

Figur 1 und 2 zeigen eine Lichtleiteranordnung 1 einer Beleuchtungsvorrichtung für Fahrzeuge, insbesondere Kraftfahrzeuge in einer Ansicht von Vorne und von Hinten. Die Lichtleiteranordnung 1 umfasst einen Lichtleiter 4, in welchen Licht von zumindest einer nicht dargestellten Lichtquelle über eine Lichtzuleitung eingekoppelt wird. Dazu mündet die Lichtzuleitung mit einem Zuleitungsabschnitt 3 in dem gezeigten Beispiel von unten in den Lichtleiter 2. Die zumindest eine Lichtquelle kann sich dabei an beliebiger Stelle befinden, entsprechend ist auch die Lichtzuleitung, von der nur der Zuleitungsabschnitt 3 dargestellt ist, ausgebildet.

Der Lichtleiter 4 weist ein oder mehrere Auskopplungsstellen 2 zur Auskoppelung zumindest eines Teils des eingekoppelten Lichtes auf. Üblicherweise ist dabei die Vorderseite des Lichtleiters 4 als Auskoppelungsstelle bzw. Auskoppelungsbereich ausgebildet, über welchen das in den Lichtleiter 4 eingekoppelte Licht austreten und nach Vorne abgestrahlt werden kann. Die Vorderseite des Lichtleiters 4 ist somit eine Lichtauskopplungsfläche (Auskoppelungsbereich bzw. -stelle in der obigen Formulierung).

An seiner Rückseite, der Vorderseite 2 gegenüberliegend angeordnet, weist der Lichtleiter 4 dazu ein Lichtumlenkeinrichtung 5 auf, welche beispielsweise aus einer Anzahl nebeneinander liegender Prismen besteht, und welche das in den Lichtleiter 4 eingekoppelte Licht nach Vorne, zu der Vorderseite 2 umlenken, wo es aus dem Lichtleiter 4 austreten kann und in einem Bereich vor der Beleuchtungsvorrichtung bzw. dem Kraftfahrzeug eine Lichtverteilung bildet.

Beispielsweise handelt es sich dabei um regelmäßig angeordnete, vorzugsweise unmittelbar aneinander anschließende reflektierende Flächen, wobei diese Flächen die Seitenflächen von Prismen sind. An den Prismen wird das auftreffende Licht derart reflektiert, dass es auf der gegenüberliegenden Seite, also der Lichtauskopplungsfläche aus dem Lichtleiter 4 austritt. Die Lichtauskopplungsseite bzw. -fläche ist hierbei die in Richtung auf z.B. eine Abdeckscheibe eines Scheinwerfers, welcher die Beleuchtungsvorrichtung aufnimmt, weisende Seite.

Zur Umlenkung des eingekoppelten Lichtes zu der bzw. den Auskopplungsstellen 2 ist eine Umlenkeinrichtung 100, welche Umlenkeinrichtung 100 das in einer Haupt-Lichteinspeisrichtung L1 eingekoppelte Licht durch Reflexion an den Reflexionsflächen 101, 102 der Umlenkeinrichtung 100 in den Lichtleiter 4 hinein umlenkt.

In dem gezeigten Ausführungsbeispiel weist der Lichtleiter 4 zwei Lichtleiter-Arme, die anfänglich unter 180° zueinander verlaufen. Die Lichtleiter-Arme verlaufen dabei am Anfang, im Bereich der Umlenkeinrichtung und unmittelbar an diese anschließend im Wesentlichen geradlinig.

Die Umlenkeinrichtung lenkt somit die einfallenden Lichtstrahlen um jeweils 45° in die beiden Haupt-Lichtumlenkrichtungen L2, L2' in die beiden Lichtleiter-Arme hinein ab.

Der Übergang 3a von dem Zuleitungsabschnitt 3 in den Lichtleiter 4 wird als Einspeisbereich 3a bezeichnet. In dem Einspeisbereich 3a ist die Umlenkeinrichtung 100 angeordnet, synonym wird daher für den Begriff "Einspeisbereich" auf der Begriff "Umlenkbereich" verwendet.

Üblicherweise ist gewünscht, dass der Lichtleiter bei frontaler Betrachtung möglichst homogen, also über die gesamte Länge möglichst gleichmäßig stark leuchtend erscheint. Allerdings tritt häufig das Problem von Leuchtdichteschwankungen, insbesondere in einem Bereich unmittelbar an den Umlenk- bzw. Einspeisbereich anschließend auf, wo sich anschließend an den Umlenkbereich in dem oder den Lichtleiterabschnitten hellere Bereiche, sogenannte "Hot-Spots" bilden, die visuelle gut erkennbar sind. Anschließend "beruhigt" sich die Lichtverteilung, d.h. der Lichtleiter bzw. die Lichtleiterabschnitte erscheinen wieder homogen.

Diese "Hot-Spots" sind in Figur 1 mit H bezeichnet.

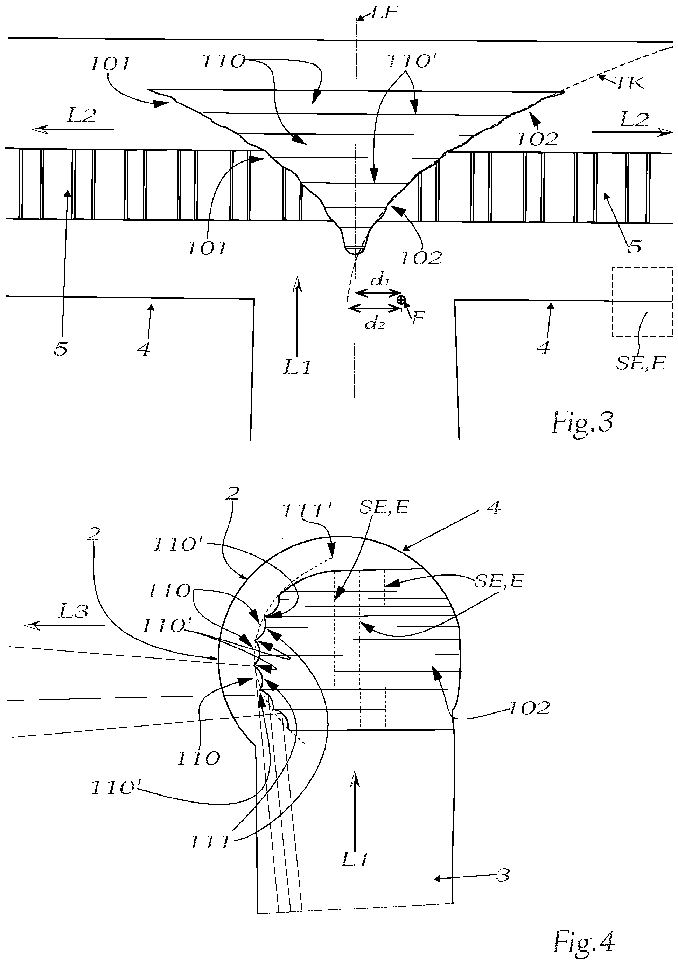

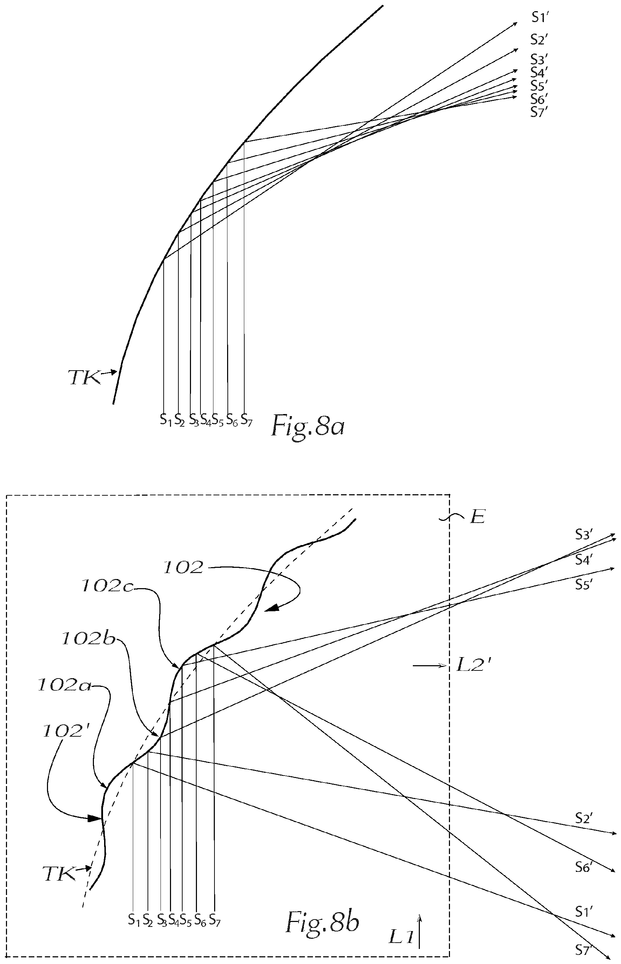

Um diese Hot-Spots abzuschwächen bzw. zu beseitigen, sodass auch im Bereich an Umlenkeinrichtung anschließend ein homogener Leuchteindruck entsteht, ist vorgesehen, dass die beiden Reflexionsflächen 101, 102 jeweils zumindest zwei Reflexions-Teilflächen 102a, 102b, 102c umfassen (Figur 3), wobei parallele Lichtstrahlen S1 - S7 (Figur 8b) eines auf die Reflexionsflächen 101,102 auftreffenden Lichtbündels, zumindest in einer Projektion in eine Ausbreitungs-Ebene E, welche aufgespannt wird von der Haupt-Lichteinspeisrichtung L1 und den den beiden Reflexionsflächen 101,102 zugehörigen Haupt-Lichtumlenkrichtungen L2, L2' (in dem gezeigten Beispiel liegen L1, L2 und L2' in einer gemeinsamen Ebene; im allgemeinsten Fall liegen jeweils L1 und L2 sowie L1 und L2' in je einer gemeinsamen Ebene),

- in einer oder mehreren ersten Reflexions-Teilflächen 102'b divergent S1', S2', S3' reflektiert werden (Fig. 8b) und

- in einer oder mehreren zweiten Reflexions-Teilflächen 102'a, 102'c konvergent S4', S5', S6', S7' reflektiert werden (Fig. 8b).

"Konvergent" bedeutet dabei, dass reflektierte Lichtstrahlen aus einer zusammenhängenden Reflexions-Teilfläche so reflektiert werden, dass sie sich überkreuzen. Das Überkreuzen kann, muss aber nicht in einem gemeinsamen Punkt erfolgen. "Divergent" bedeutet, dass reflektierte Lichtstrahlen aus einer zusammenhängenden Reflexions-Teilfläche so reflektiert werden, dass sie sich nicht überkreuzen und vorzugsweise voneinander entfernen, also auseinander laufen.

Die zumindest eine Reflexionsfläche besteht aus einer oder mehreren ersten Reflexions-Teilflächen, wobei jede erste Teilfläche vorzugsweise eine in sich zusammenhängende Fläche ist. Die zumindest eine Reflexionsfläche besteht weiters aus einer oder mehreren zweiten Reflexions-Teilflächen, wobei jede zweite Teilfläche vorzugsweise eine in sich zusammenhängende Fläche ist.

Durch diese Ausgestaltung der Reflexionsflächen der Umlenkeinrichtung wird eine Durchmischung des in den Lichtleiter eingekoppelten Lichtes erreicht. Dies führt zu einem homogenisierten Leuchteindruck, und die beobachteten Hotspots H großer Leuchtdichten im Nahbereich der Umlenkeinrichtung 100 verschwinden.

Die Reflexions-Teilflächen 102'a, 102'b, 102'c sind dabei derart angeordnet, dass konvergente und divergente Abstrahlrichtungen der reflektierten Strahlen abwechselnd auftreten und vorzugsweise periodisch variieren.

Jeweils ein erster und ein zweiter Reflexions-Teilbereich 102'a, 102'b, 102'c grenzen dazu unmittelbar aneinander an bzw. gehen ineinander über.

Im Sinne einer gleichmäßigen Durchmischung ist es auch, wenn benachbarte Reflexions-Teilbereiche stetig ineinander übergehen. In diesem Sinne ist es auch von Vorteil, wenn die Reflexions-Teilbereiche einen stetigen Verlauf, vorzugsweise einen C1-stetigen Verlauf aufweisen. Bei der gezeigten konkreten, bevorzugten Ausführungsform ist vorgesehen, dass die Reflexionsflächen 101, 102 eine wellenförmige Struktur aufweisen bzw. durch eine wellenförmige Struktur gebildet sind.

Im Bereich der Vertiefungen erfolgt eine konvergente Reflexion, im Bereich der Erhebungen eine divergente Reflexion. Der Punkt, an welchem der Übergang zwischen divergent und konvergent erfolgt, kann abhängig von der Ausrichtung des Lichtbündels paralleler Strahlen "wandern".

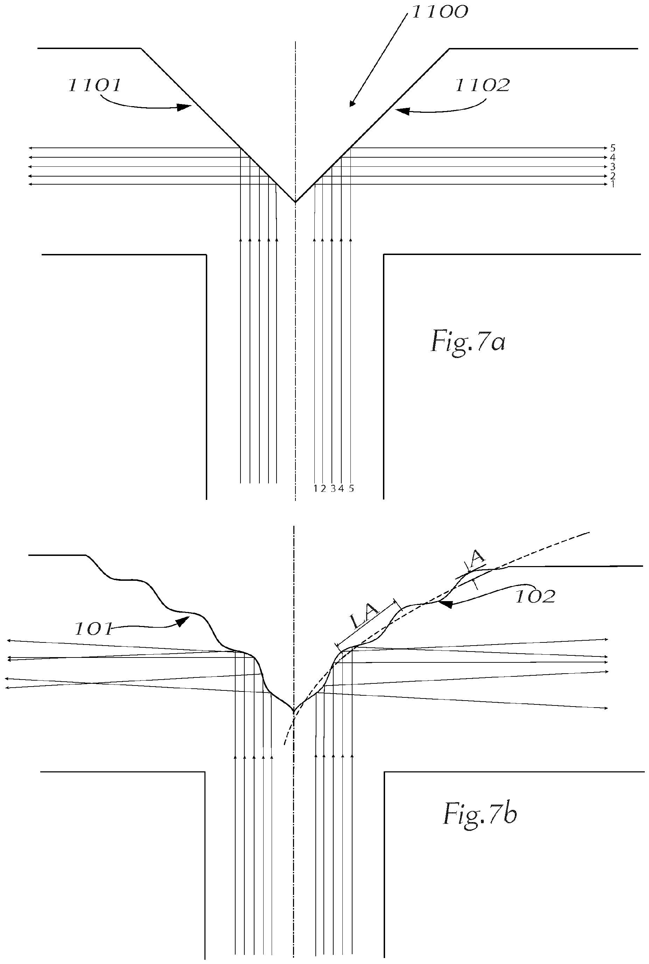

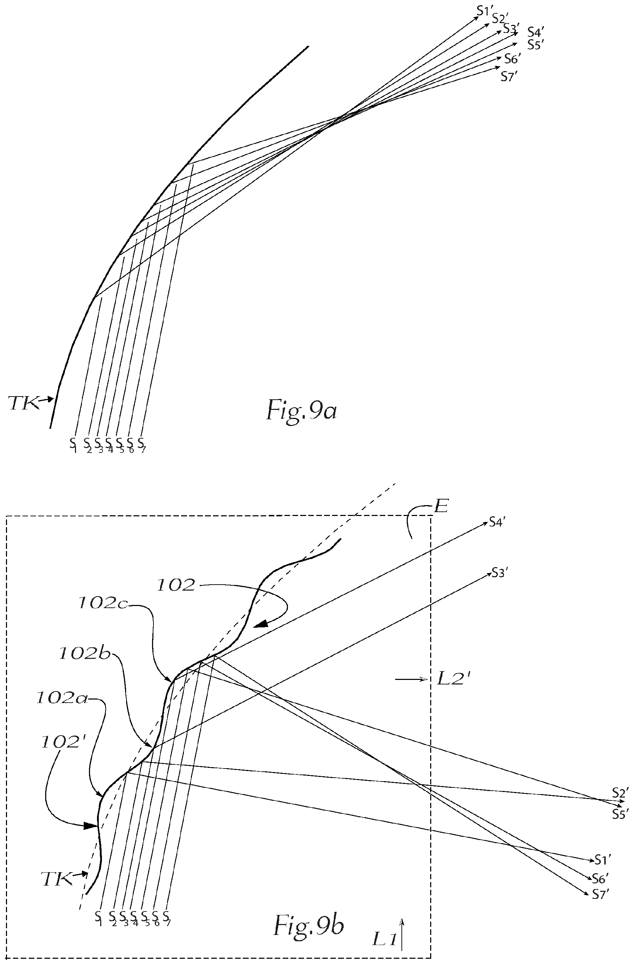

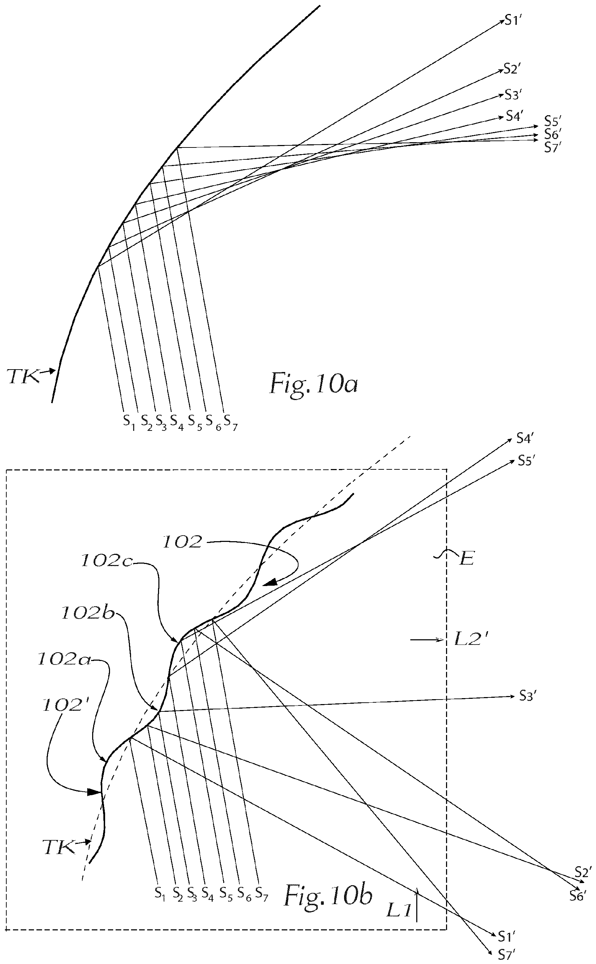

Die Figuren 7a - 8b zeigen den Fall eines Lichtbündels, welches parallel zu L1 einfällt. Die Figuren 9a und 10a zeigen noch den Einfall eines parallelen Lichtbündels, welches nicht parallel zu L1 einfällt, vor (S1 - S7) und nach (S1' - S7') der Reflexion an einer herkömmlichen Oberfläche wie in Figur 8a gezeigt. Die Figuren 9b und 10b zeigen diese beiden Lichtbündel, welche nun und im ungefähr selben Bereich auf die erfindungsgemäße wellenförmige Struktur wie in Figur 8b gezeigt auftreffen. Wie zu erkennen ist, zeigt sich auch hier das abwechselnd konvergent - divergente Abstrahlverhalten der reflektierten Strahlen (S1' - S7'), lediglich die Grenzen zwischen einzelnen Reflexions-Teilbereichen liegen hier an anderer Stelle als im Fall des Lichtbündels, welches parallel zur Richtung L1 einfällt. Bei der Unterteilung in Reflexions-Teilbereiche handelt es sich somit um eine Einteilung, welche von der Richtung des einfallenden Lichtbündels paralleler Strahlen abhängt.

Wie Figur 3 zeigt, breitet sich die wellenförmige Struktur der Reflexionsflächen 101, 102 von dem Licht-Einspeisbereich 3a weglaufend aus. Die "Ausbreitungsrichtung" der wellenförmigen Struktur bzw. der Strukturen ist also (jeweils) in den Lichtleiter hinein gerichtet.

Die Ausbreitungsrichtung der wellenförmigen Struktur verläuft dabei vorzugsweise, wie gezeigt parallel zu einer Ausbreitungs-Ebene E, welche Ausbreitungs-Ebene E aufgespannt wird von der Haupt-Lichteinspeisrichtung L1 und den beiden Haupt-Lichtumlenkrichtungen L2, L2'.

Grundsätzlich besteht eine Lichtleiteranordnung aus einem oder mehreren miteinander verbundenen Lichtleitern, im konkreten Fall aus einem durchgehenden Lichtleiter. Der Lichtleiter kann einen "Leuchtring" bilden, also zu einem Ring, z.B. einem kreisförmigen oder anders gestalteten, beispielsweise geschlossenen Ring geformt sein. Der Lichtleiter muss, wie in den Figuren gezeigt, nicht in sich geschlossen sein, es sind z.B. auch eine U-Form oder andere, im Grunde beliebige Formen möglich, bei zwei (oder mehr) Lichtleitabschnitten können diese auch unterschiedliche Länge aufweisen (wie ebenfalls in den Figuren gezeigt). In diesen zumindest einen Lichtleiter wird über eine Lichtzuleitung Licht in den zumindest einen Lichtleiter eingespeist. Die Lichtzuleitung kann im Prinzip beliebig geformt sein. Unmittelbar vor dem Einspeisbereich 3a in den Lichtleiter weist die Lichtzuleitung einen Zuleitungsabschnitt 3 auf, im gezeigten Beispiel ist dies ein gerader Abschnitt 3, der von unten unter einem Winkel von 90° in den Lichtleiter mündet. Die Ausrichtung dieses Abschnittes 3 gibt im Wesentlichen die Haupt-Lichteinspeisrichtung L1 vor, die in diesem Fall in etwa senkrecht auf den Lichtleiter verläuft.

Dabei ist üblicherweise, auch in dem gezeigten Beispiel. vorgesehen, dass die Ausbreitungs-Ebene E eine Vertikalebene ist, welche normal auf die Haupt-Lichtauskoppelrichtung L3 steht. Die Lichtauskoppelrichtung L3 steht normal auf die Blattebene.

Vorzugsweise ist vorgesehen, dass die wellenförmige Struktur in zueinander parallelen Schnittebenen SE, vorzugsweise über die gesamte Reflexionsfläche 101,102, einen identischen Verlauf aufweist. Es handelt es somit bei dieser Ausführungsform um sogenannte "Zylinderwellen", d.h. in beliebigen parallelen Schnitten durch die Reflexionsflächen 101,102, vorzugsweise über die gesamte Erstreckung der Reflexionsfläche in einer Richtung normal auf die Schnittebenen haben die Wellen denselben Verlauf.

Beispielsweise liegen die Schnittebenen SE parallel zu der Ausbreitungs-Ebene E, sodass die Wellen über die gesamte "Breite" der Umlenkeinrichtung denselben Verlauf aufweisen.

Die wellenförmige Struktur ist - betrachtet man einen Schnitt in der Ebene E oder in einer zu der Ebene E parallelen Ebene (Schnittebenen SE) - einer Trägerkurve TK aufgeprägt, wie dies in Figur 7b dargestellt. In drei Dimensionen betrachtet bedeutet dies, dass einer unmodifizierten Reflexionsfläche erfindungsgemäß eine wellenförmige Struktur aufgeprägt/überlagert ist.

Die Trägerkurven TK liegen jeweils in den parallelen Schnittebenen SE.

Betrachtet man beispielsweise Figur 7a, welche einen besonders einfachen, bekannten Fall darstellt, bei welchem die Reflexionsflächen eben ausgebildet sind, dann erkennt man, dass die parallelen Lichtstrahlen eines Lichtbündels, welches in diesem Fall in der Haupt-Lichteinspeisrichtung L1 einfällt, wieder als parallele Strahlen reflektiert werden.

Betrachtet man Figur 8a, welche eine unmodifizierte, gekrümmte Reflexionsfläche zeigt, so erkennt man, dass die Strahlen nach der Reflexion nicht mehr parallel zueinander verlaufen, allerdings werden alle Strahlen mit derselben Orientierung, geordnet und sich überkreuzend reflektiert, sodass es nach wie vor zu einer Hot-Spot Bildung kommt.

Bei der Ausgestaltung wie in Figur 7b und schematisch noch in Figur 8b gezeigt, ergibt sich das erfindungsgemäße Reflexionsverhalten, bei dem in unterschiedlichen Bereichen der Reflexionsfläche wie beschrieben die Strahlen divergent oder konvergent reflektiert werden.

Nochmals auf Figur 7b zurückkommend ist der Wert der Amplituden A der wellenförmigen Struktur der Reflexionsfläche 101, 102 in Bezug auf die Trägerkurve TK (Amplitude A = Maximalabstand der wellenförmigen Kurve, also der tatsächlichen Reflexionsfläche zu der Trägerkurve) über die gesamte wellenförmige Struktur, d.h. entlang der gesamten Trägerkurve TK konstant.

In einem betrachteten Schnitt sind die Amplituden, also die maximale Auslenkung bzw. der maximale Normalabstand zu der jeweiligen Trägerkurve TK somit konstant

In dem gezeigten Beispiel bedeutet dies auch, dass in allen Schnittebenen die Amplituden gleich groß sind.

Beispielsweise beträgt der Wert der Amplituden A 0,05 mm.

Weiters ist es zweckmäßig, wenn die Wellenlänge LA der wellenförmigen Struktur über die gesamte Trägerkurve TK konstant ist. Beispielsweise liegt die Wellenlänge LA der wellenförmigen Struktur in einem Bereich von 0,25 mm bis 1,5 mm, beispielsweise bei 1 mm.

In dem gezeigten Beispiel weist die Wellenstruktur eine periodische Struktur aus, sodass auch die Reflexionsrichtung der reflektierten Strahlen periodisch variiert wird.

Zusätzlich oder alternativ ist die Wellenstruktur stetig, d.h. die von der Wellenstruktur gebildet, reflektierende und streuende Reflexionsfläche ist stetig und bildet eine reguläre Fläche.

Beispielsweise gilt für das Verhältnis Amplitude/Wellenlänge $\leq 0{,}05$.

Bei der bevorzugten, gezeigten Ausführungsform sind die Trägerkurve TK gekrümmt, vorzugsweise konvex gekrümmt ausgebildet. Besonders bevorzugt ist es, wenn die Trägerkurven TK Parabeln sind.

Der Brennpunkt F einer Parabel TK, vorzugsweise aller Parabeln, liegt/liegen in etwa im Bereich der Unterseite (d.h., allgemein gesprochen und nicht auf die gezeigte Ausführungsform beschränkt, an jener Seite, an welcher die Lichtzuleitung 3 Licht in den zumindest einen Lichtleiter einspeist) des (zumindest einen) Lichtleiters 4 der Lichtleiteranordnung 1 liegt, und zwar vorzugsweise genau auf der Unterseite. (In Bezug auf das konkrete Ausführungsbeispiel siehe dazu Figur 3.)

Der Brennpunkt F einer oder mehrerer, vorzugsweise aller Parabeln TK weist von einer Längsmittelebene LE des in den (zumindest einen) Lichtleiter 4 mündenden Zuleitungsabschnittes 3 einen Normalabstand d1 von ca. 45% des Radius des Zuleitungsabschnittes 3 auf.

Die Längsmittelebene LE ist dabei jene Ebene, welche durch die Längsachse des Zuleitungsabschnittes 3 verläuft und normal auf die Haupt-Lichtumlenkrichtung L2 steht.

Bei einer konkreten Ausführungsform ist vorgesehen, dass die Brennweite d2 einer oder mehrerer, vorzugsweise aller Parabeln ca. 55% des Radius des-Zuleitungsabschnittes 3 beträgt.

Bei einer in Figur 1 allgemein gezeigten Beleuchtungsvorrichtung bzw. Lichtleitanordnung 1 kann in nachteiliger Weise das Problem auftreten, dass bei einer Ansicht der Vorderseite der Lichtleiteranordnung im Bereich der Umlenkeinrichtung ein abgedunkelter Bereich D erscheint (siehe Figur 1), welcher einen optisch unschönen Eindruck hinterlässt.

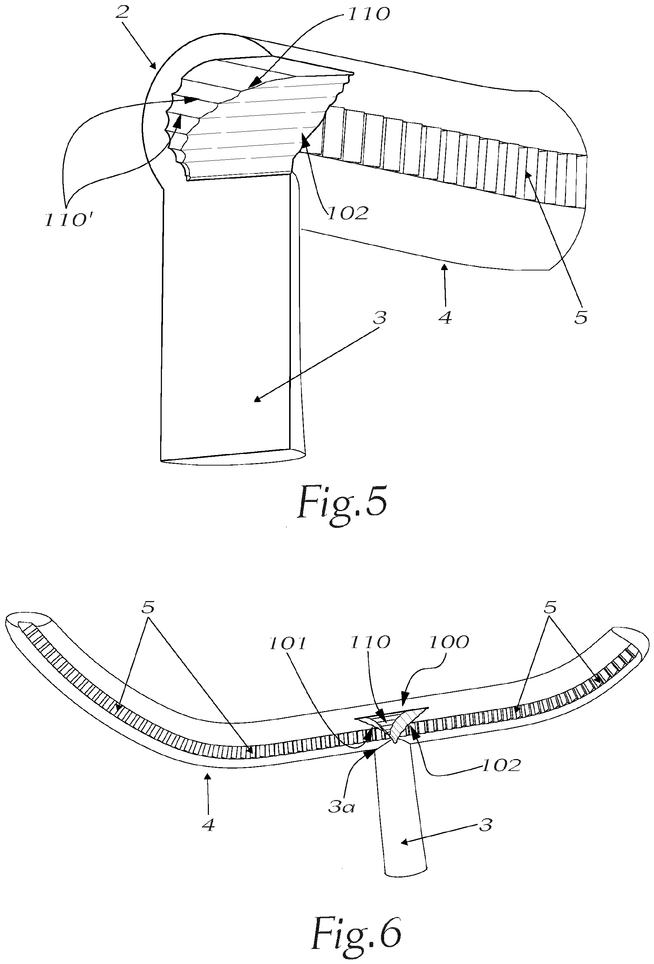

Um diesen abgedunkelten/ dunklen Bereich zu beseitigen und eine möglichst homogene Ausleuchtung der Lichtleiteranordnung zu schaffen, kann vorgesehen sein, dass die Umlenkeinrichtung 100 zumindest eine Licht nach vorne, d.h. in Richtung der Licht-Auskoppelrichtung L3, umlenkende Struktur 110 aufweist. Eine solche Licht umlenkende Struktur 110 ist im Detail in den Figuren 3 und 4 sowie im Überblick in den Figuren 5 und 6 gezeigt. Mit einer solchen Licht umlenkenden Struktur 110 kann Licht derart umgelenkt werden, dass es aus jenen Bereichen (d.h. "vor" der Umlenkeinrichtung 100) austritt, welche ursprünglich dunkler erscheinen, sodass diese somit heller erscheinen.

In dem gezeigten Beispiel ist die Licht umlenkende Struktur 110 aus einer Oberfläche 111 gebildet, welche mehrere Längsrillen 110' aufweist. Die Längsrillen verschmieren das gerade nach vorne austretende Licht derart, dass der dunkle Fleck im Leuchteindruck der Umlenkeinrichtung aufgehellt wird.

Grundsätzlich könnte der Bereich "vor" der Umlenkeinrichtung leer, d.h. ohne Lichtleitmaterial ausgestaltet sein, d.h. die Umlenkeinrichtung mit den beiden Reflexionsflächen 101, 102 wäre eine Höhlung, die den Lichtleiter 4 von Hinten nach Vorne vollständig durchsetzt. In diesem Fall würde der Lichtleiter im Bereich der Umlenkeinrichtung bei einer Ansicht von Vorne vollständig dunkel erscheinen.

Die Höhlung kann sich auch von hinten in den Lichtleiter 4 hinein erstrecken ohne diese vollständig zu durchsetzen. In diesem Fall kann Licht, gegebenenfalls auch nach vorne austreten, ohne gezielte Umlenkung erscheint aber der Lichtleiter im Bereich der Umlenkeinrichtung dunkler als der Rest des Lichtleiters.

Bei dem weiteren, optionalen erfinderischen Aspekt mit zumindest einer nach Vorne Licht umlenkenden Struktur 110 kann gezielt der Bereich vor der Lichtumlenkeinrichtung 100 aufgehellt werden, sodass auch dieser Bereich gleichmäßig erleuchtet ist.

Die Längsrillen 110'verlaufen wie gezeigt parallel zueinander, nämlich parallel zu einer Ebene, welche normal auf die Licht-Auskoppelrichtung L3 steht bzw. welche parallel ist zu einer Ebene, welche aufgespannt wird von der Haupt-Lichteinspeisrichtung L1 und der Haupt-Lichtumlenkrichtung L2.

Die Hauptabstrahlrichtung L3 (=Auskoppelrichtung) steht normal auf eine Ebene des Lichtleiters, die durch beiden Richtungsvektoren L1 und L2 aufgespannt wird.

In dem gezeigten Beispiel verlaufen die Längsrillen 110' in Richtung der Haupt-Lichtumlenkrichtung L2, in Richtung des Lichtleiters 4 im Bereich des Lichteinspeisbereiches 3a.

Die Oberfläche 111 ist eine rückwärtige, dem Lichtauskoppelbereich 2 abgewandte Begrenzungsfläche des Lichtleiters 4 im Bereich der Umlenkeinrichtung 100. In dem gezeigten Beispiel, siehe insbesondere Figur 4, ist vorgesehen, dass eine die Rillen 110' einhüllende, gedachte Fläche 111' nach Vorne, in Richtung der Lichtauskoppelstelle 2 gekrümmt ist, wobei die Kontur der einhüllenden Fläche 111' in Vertikalschnitten, z.B. in Vertikalschnitten normal auf die Licht-Umlenkrichtung L2 einen Teilkreis (Kreisabschnitt) darstellt.

Die Rillen 110'sind als Vertiefungen in der Oberfläche 111 ausgebildet.

Je eine eine Rille 110' bildende Vertiefung ist jeweils von zwei Erhebungen, welche sich von der Lichtauskoppelstelle 2 (dem Lichtauskoppelbereich 2, also der Vorderseite des Lichtleiters 4) weggerichtet erheben, begrenzt. Die Erhebungen verlaufen in Schnitten, welche in einer Ebene, welche normal auf Haupt-Lichtumlenkrichtung L2 bzw. auf die Längsachse des Lichtleiters 4 im Bereich der Lichteinkoppelstelle 3a steht, die Kontur eines Teilkreises bilden, wobei sich benachbarte Teilkreise in der gedachten Fläche 111' schneiden.

Bei einer konkreten Ausführungsform ist vorgesehen, dass der Krümmungsradius der Teilkreise in einem Bereich von 0,25 mm bis 0,75 mm liegt, beispielsweise 0,5 mm beträgt.

Die Trägerfläche der Längsrillen ist eine Offsetfläche der äußeren vorderen Begrenzung des Lichtleiters; der Abstand der Offsetfläche zu der vorderen Begrenzungsfläche sollte vorzugsweise gering sein und entspricht vorzugsweise einer typischen Wandstärke von etwa 1,0 mm. Die Längsrillen sind einfache Zylinderoberflächen, die Radien dieser Zylinder können dem Wertebereich 0,25 mm bis 0,75 mm entstammen und diese bilden die Längsrillen. Im Prinzip sind auch andere konvexe (bezogen auf eine Betrachtung von hinten in die Höhlung hinein) Kurvenverläufe möglich, diese müssen nur das von unten eingespeiste Licht nach vorne auf die Straße umlenken. Die Auswahl eines Kreisbogens ist optisch und fertigungstechnisch besonders gut zu beherrschen und erlaubt eine einfache Berechnung und Fertigung.

Bei einer Umlenkeinrichtung 100 wie gezeigt, welche zwei Reflexionsflächen 101,102 zur Umlenkung des eingekoppelten Lichtes, beispielsweise in zwei im Wesentlichen entgegengesetzte Richtungen L2, L2', aufweist, erstrecken sich die Rillen 110' (und somit auch die Oberfläche 111) vorzugsweise von einer Reflexionsfläche 101 bis zu der anderen Reflexionsfläche 102, sodass der gesamte Bereich vor der Umlenkeinrichtung 100 entsprechend hell erscheint. Somit kann quasi die gesamte lichttechnische "Lücke" im Lichtleiter zwischen den beiden Reflexionsflächen nach vorne geschlossen werden und Licht in diesem Bereich nach Vorne emittiert werden.

Abschließend noch einmal auf die Figuren 4 - 6 zurückkommend ist bei der gezeigten Ausführungsform zu erkennen, dass die Umlenkeinrichtung 100 als Höhlung in dem Lichtleiter 4 ausgebildet ist, welche sich von hinten in den Lichtleiter 4 hineinerstreckt. Die beiden seitlich zum Lichtleiter 4 hin die Höhlung begrenzenden Flächen bilden die Reflexionsflächen 101, 102. Bei einer Variante, bei welcher auch der dunkle "Fleck" im Bereich vor der Umlenkeinrichtung beseitigt ist, erstreckt sich die Höhlung nur bis zu einer Fläche 111, an welche anschließend sich noch Lichtleitermaterial bis zu der Lichtauskoppelfläche 2 erstreckt. Diese die Höhlung nach Vorne begrenzende Fläche 111 bildet die Licht nach Vorne umlenkende Struktur.

**Patentansprüche**

1. Beleuchtungsvorrichtung für ein Fahrzeug, insbesondere für ein Kraftfahrzeug, umfassend zumindest eine Lichtquelle und zumindest eine der zumindest einen Lichtquelle zugeordnete Lichtleiteranordnung (1) zur Führung des von der zumindest einen Lichtquelle abgestrahlten und in die Lichtleiteranordnung (1) eingekoppelten Lichts,

wobei in der Lichtleiteranordnung (1) ein oder mehrere Auskopplungsstellen (2) zur Auskoppelung zumindest eines Teils des eingekoppelten Lichtes vorgesehen sind, und wobei

zur Umlenkung des eingekoppelten Lichtes zu der einen oder den mehreren Auskopplungsstellen (2) der Lichtleiteranordnung (1) eine Umlenkeinrichtung (100) zugeordnet ist,

welche Umlenkeinrichtung (100) das in einer Haupt-Lichteinspeisrichtung (L1) eingekoppelte Licht durch Reflexion an zumindest einer Reflexionsfläche (101, 102) der Umlenkeinrichtung (100) in zumindest eine Haupt-Lichtumlenkrichtung (L2, L2') umlenkt, wobei die Umlenkeinrichtung (100) zumindest eine Licht nach vorne, d.h. in Richtung einer Licht-Auskoppelrichtung (L3) umlenkende Struktur (110) aufweist, **dadurch gekennzeichnet, dass**

die zumindest eine Licht umlenkende Struktur (110) aus einer Oberfläche (111) gebildet ist, welche zumindest eine, vorzugsweise zwei oder mehrere Längsrillen (110') aufweist, wobei

die Oberfläche (111) eine rückwärtige, dem zumindest einen Lichtauskoppelbereich (2) abgewandte Begrenzungsfläche des zumindest einen Lichtleiters (4) im Bereich der Umlenkeinrichtung (100) ist, wobei eine die Rillen (110') einhüllende, gedachte Fläche (111') nach Vorne, in Richtung der zumindest einen Lichtauskoppelstelle (2) gekrümmt ist.

2. Beleuchtungsvorrichtung nach Anspruch 1, **dadurch gekennzeichnet, dass** bei zwei oder mehr Längsrillen (110') diese Längsrillen (110') parallel zueinander verlaufen.

3. Beleuchtungsvorrichtung nach Anspruch 1 oder 2, **dadurch gekennzeichnet, dass** die zumindest eine bzw. die zwei oder mehreren Längsrillen (110') parallel zu einer Ebene verlaufen, welche normal auf die Licht-Auskoppelrichtung (L3) steht bzw. welche parallel ist zu einer Ebene, welche aufgespannt wird von der Haupt-Lichteinspeisrichtung (L1) und der Haupt-Lichtumlenkrichtung (L2), wobei vorzugsweise die Längsrillen (110') in Richtung des Lichtleiters (4) im Bereich des Lichteinspeisbereiches (3a) verlaufen.

4. Beleuchtungsvorrichtung nach einem der Ansprüche 1 bis 3, **dadurch gekennzeichnet, dass** die Längsrillen (110') normal zu der Haupt-Lichteinspeisrichtung (L1) und/oder in Richtung der Haupt-Lichtumlenkrichtung (L2) verlaufen.

5. Beleuchtungsvorrichtung nach einem der Ansprüche 1 bis 4, **dadurch gekennzeichnet, dass** die Kontur der einhüllenden Fläche (111') in Vertikalschnitten, z.B. in Vertikalschnitten normal auf die Licht-Umlenkrichtung (L2) einen Teilkreis darstellt.

6. Beleuchtungsvorrichtung nach einem der Ansprüche 1 bis 5, **dadurch gekennzeichnet, dass** die zumindest eine bzw. die zwei oder mehreren Rillen (110') als Vertiefungen in der Oberfläche (111) ausgebildet sind, wobei beispielsweise eine eine Rille (110') bildende Vertiefung jeweils von zwei Erhebungen, welche sich von der Lichtauskoppelstelle (2) weggerichtet erheben, begrenzt ist.

7. Beleuchtungsvorrichtung nach Anspruch 6, **dadurch gekennzeichnet, dass** die Erhebungen in Schnitten, welche in einer Ebene verlaufen, welche normal auf Haupt-Lichtumlenkrichtung (L2) bzw. auf die Längsachse des Lichtleiters (4) im Bereich der Lichteinkoppelstelle (3a) steht, die Kontur eines Teilkreises bilden, wobei sich benachbarte Teilkreise in der gedachten Fläche (111') schneiden, und wobei vorzugsweise der Krümmungsradius der Teilkreise in einem Bereich von 0,25 mm bis 0,75 mm liegt, beispielsweise 0,5 mm beträgt.

8. Beleuchtungsvorrichtung nach einem der Ansprüche 1 bis 7, **dadurch gekennzeichnet, dass** sich die zumindest eine Rille (110') bei einer Umlenkeinrichtung (100), welche zwei Reflexionsflächen (101,102) zur Umlenkung des eingekoppelten Lichtes in zwei im Wesentlichen entgegengesetzte Richtungen (L2), aufweist, von einer Reflexionsfläche (101) bis zu der anderen Reflexionsfläche (102) erstreckt, wobei sich vorzugsweise die die zumindest eine Rille (110') aufweisende Oberfläche (111) von der einen Reflexionsfläche (101) bis zu der anderen Reflexionsfläche (102) erstreckt.

9. Beleuchtungsvorrichtung nach einem der Ansprüche 1 bis 8, **dadurch gekennzeichnet, dass** die zumindest eine Reflexionsfläche (101, 102) zumindest zwei Reflexions-Teilflächen (102a, 102b, 102c) umfasst, wobei

parallele Lichtstrahlen (S1 - S7) eines auf die Reflexionsfläche (101, 102) auftreffenden Lichtbündels, zumindest in einer Projektion in eine Ausbreitungs-Ebene (E), welche aufgespannt wird von der Haupt-Lichteinspeisrichtung (L1) und der dem zumindest einen Reflexionsfläche (101, 102) zugehörigen Haupt-Lichtumlenkrichtung (L2, L2'),

• in einer oder mehreren ersten Reflexions-Teilflächen (102'b) divergent (S1', S2', S3') reflektiert werden und

in einer oder mehreren zweiten Reflexions-Teilflächen (102'a, 102'c) konvergent (S4', S5', S6', S7') reflektiert werden, wobei die Reflexions-Teilflächen (102'a, 102'b, 102'c) derart angeordnet und/oder ausgebildet sind, dass konvergente und divergente Abstrahlrichtungen der reflektierten Strahlen abwechselnd auftreten und vorzugsweise periodisch variieren.,

**10.** Beleuchtungsvorrichtung nach Anspruch 9, **dadurch gekennzeichnet, dass** die zumindest eine Reflexionsfläche (101, 102) eine wellenförmige Struktur aufweist bzw. durch eine wellenförmige Struktur gebildet ist, wobei sich vorzugsweise die wellenförmige Struktur der zumindest einen Reflexionsfläche (101, 102) von einem Licht-Einspeisbereich (3a), über welchen Licht der zumindest einen Lichtquelle in zumindest einen Lichtleiter (4) der Lichtleiteranordnung (1) eingespeist wird, weg ausbreitet.

**11.** Beleuchtungsvorrichtung nach Anspruch 10, **dadurch gekennzeichnet, dass** die Ausbreitungsrichtung der wellenförmigen Struktur parallel zu einer Ausbreitungs-Ebene (E) verläuft, welche Ausbreitungs-Ebene (E) aufgespannt wird von der Haupt-Lichteinspeisrichtung (L1) und der Haupt-Lichtumlenkrichtung (L2), wobei vorzugsweise die Ausbreitungs-Ebene (E) eine Vertikalebene ist, welche normal auf die Haupt-Lichtauskoppelrichtung (L3) steht.

**12.** Beleuchtungsvorrichtung nach Anspruch 10 oder 11, **dadurch gekennzeichnet, dass** die wellenförmige Struktur in zueinander parallelen Schnittebenen (SE), vorzugsweise über die gesamte zumindest eine Reflexionsfläche (101,102), einen identischen Verlauf aufweist, wobei beispielsweise die Schnittebenen (SE) parallel zu der Ausbreitungs-Ebene (E) liegen.

**13.** Beleuchtungsvorrichtung nach einem der Ansprüche 10 oder 12, **dadurch gekennzeichnet, dass** der Wert der Amplituden (A) der wellenförmigen Struktur (101', 102') in Bezug auf eine Trägerkurve (TK), welche in einer Schnittebene (SE) liegt, über die gesamte wellenförmige Struktur, d.h. entlang der gesamten Trägerkurve (TK) konstant sind, wobei vorzugsweise der Wert der Amplituden (A) 0,05 mm beträgt.

**14.** Beleuchtungsvorrichtung nach einem der Ansprüche 10 bis 13, **dadurch gekennzeichnet, dass** die Wellenlänge (LA) der wellenförmigen Struktur über die gesamte Trägerkurve (TK) konstant ist, und/oder die Wellenlänge (LA) der wellenförmigen Struktur in einem Bereich von 0,25 mm bis 1,5 mm liegt, beispielsweise 1 mm beträgt.

**15.** Beleuchtungsvorrichtung nach einem der Ansprüche 10 bis 14, **dadurch gekennzeichnet, dass** die Wellenstruktur eine periodische Struktur aufweist.

**16.** Beleuchtungsvorrichtung nach einem der Ansprüche 10 bis 15, **dadurch gekennzeichnet, dass** gilt: Amplitude/Wellenlänge ≤ 0,05.

**17.** Beleuchtungsvorrichtung nach einem der Ansprüche 13 bis 16, **dadurch gekennzeichnet, dass** die Trägerkurven (TK) als Geraden oder gekrümmt, vorzugsweise konvex gekrümmt, ausgebildet sind.

**18.** Beleuchtungsvorrichtung nach Anspruch 17, **dadurch gekennzeichnet, dass** die Trägerkurven (TK) Parabeln sind, und vorzugsweise der Brennpunkt (F) einer Parabel (TK) in etwa im Bereich der Unterseite des zumindest einen Lichtleiters (4) der Lichtleiteranordnung (1) liegt.

**19.** Beleuchtungsvorrichtung nach einem der Ansprüche 6 bis 18, **dadurch gekennzeichnet, dass** die Einhüllende der Amplituden der Wellenstruktur die Form einer gedämpften Schwingung aufweist, wobei vorzugsweise die dem Licht-Einspeisbereich (3a) nächstgelegene Amplitude die maximale Amplitude ist.

**20.** Beleuchtungsvorrichtung nach einem der Ansprüche 1 bis 19, **dadurch gekennzeichnet, dass** die Umlenkeinrichtung (100) zwei Reflexionsflächen (101, 102) zur Umlenkung des eingekoppelten Lichtes, vorzugsweise in zwei im Wesentlichen entgegengesetzte Richtungen (L2), aufweist.

**21.** Beleuchtungsvorrichtung nach einem der Ansprüche 1 bis 20, **dadurch gekennzeichnet, dass** die Umlenkeinrichtung (100) als Höhlung in dem Lichtleiter (4) ausgebildet ist.

**22.** Beleuchtungsvorrichtung nach einem der Ansprüche 1 bis 21, **dadurch gekennzeichnet, dass** die Umlenkeinrichtung (100) als Ausnehmung in dem Lichtleiter (4) ausgebildet ist.

**23.** Fahrzeugscheinwerfer mit zumindest einer Beleuchtungsvorrichtung nach einem der Ansprüche 1 bis 22.

**Claims**

**1.** An illumination device for a vehicle, and in particular for a motor vehicle, comprising at least one light source and at least one light guide system (1) associated with the at least one light source for guiding the light emitted by the at least one light source and coupled into the light guide system (1), one or more outcoupling points (2) being provided in the light guide system (1) for outcoupling at least a portion of the incoupled light, and a deflection unit (100) being associated with the one or the more outcoupling points (2) of the light guide system (1) for deflecting the incoupled light, the deflection unit (100) deflecting the light incoupled in a main light input direction (L1) by reflection on at least one reflection surface (101, 102) of the deflection unit (100) in at least one main light deflection direction (L2, L2'),

the deflection unit (100) comprising at least one structure (110) deflecting light forwardly, which is to say in a direction of a light outcoupling direction (L3), **characterized in that**

the at least one light deflecting structure (110) is formed of a surface (111) comprising at least one, and preferably two or more longitudinal grooves (110'),

the surface (111) being a rear delimiting surface, facing away from the at least one light outcoupling region (2), of the at least one light guide (4) in the region of the deflection unit (100), an imaginary surface area (111') enveloping the grooves (110') being curved forwardly, in the direction of the at least one light outcoupling point (2).

2. The illumination device according to claim 1, **characterized in that**, when two or more longitudinal grooves (110') are present, these longitudinal grooves (110') extend parallel to one another.

3. The illumination device according to claim 1 or 2, **characterized in that** the at least one or the two or more longitudinal grooves (110') extend parallel to a plane which is normal with respect to the light outcoupling direction (L3) or which is parallel to a plane spanned by the main light input direction (L1) and the main light deflection direction (L2), the longitudinal grooves (110') preferably extending in the direction of the light guide (4) in the region of the light input region (3a).

4. The illumination device according to any one of claims 1 to 3, **characterized in that** the longitudinal grooves (110') extend normally with respect to the main light input direction (L1) and/or in the direction of the main light deflection direction (L2).

5. The illumination device according to any one of claims 1 to 4, **characterized in that** the contour of the enveloping surface area (111') represents a circular segment in vertical sections, for example in vertical sections normal with respect to the light deflection direction (L2).

6. The illumination device according to any one of claims 1 to 5, **characterized in that** the at least one or the two or more grooves (110') are designed as depressions in the surface (111), for example a depression forming a groove (110') being delimited by two elevations, which ascend directed away from the light outcoupling point (2).

7. The illumination device according to claim 6, **characterized in that** the elevations, in sections which extend in a plane that is normal with respect to the main light deflection direction (L2) or with respect to the longitudinal axis of the light guide (4) in the region of the light incoupling point (3a), form the contour of a circular segment, neighboring circular segments intersecting in the imaginary surface area (111'), and the radius of curvature of the circular segments preferably being in a range of 0.25 mm to 0.75 mm, for example 0.5 mm.

8. The illumination device according to any one of claims 1 to 7, **characterized in that**, in a deflection unit (100) comprising two reflection surfaces (101, 102) for deflecting the incoupled light in two essentially opposite directions (L2), the at least one groove (110') extends from one reflection surface (101) to the other reflection surface (102), the surface (111) comprising the at least one groove (110') preferably extending from the one reflection surface (101) to the other reflection surface (102).

9. The illumination device according to any one of claims 1 to 8, **characterized in that** the at least one reflection surface (101, 102) comprises at least two reflection subsurfaces (102a, 102b, 102c), wherein parallel rays (S1 - S7) of a light beam impinging upon the reflection surface (101, 102), at least in a projection in a spread plane (E), which is spanned by the main light input direction (L1) and the main light deflection direction (L2, L2') associated with the at least one reflection surface (101, 102),

• are reflected in one or more first reflection subsurfaces (102'b) in a diverging manner (S1', S2', S3') and

are reflected in one or more second reflection subsurfaces (102'a, 102'c) in a converging manner (S4', S5', S6', S7'), the reflection subsurfaces (102'a, 102'b, 102'c) being arranged and/or designed in such a way that converging and diverging irradiation directions of the reflected rays occur alternately, and preferably vary periodically.

10. The illumination device according to claim 9, **characterized in that** the at least one reflection surface (101, 102) has an undulated structure or is formed by an undulated structure, the undulated structure of the at least one reflection surface (101, 102) preferably propagating away from a light input region (3a), via which light of the at least one light source is input into at least one light guide (4) of the light guide system (1).

11. The illumination device according to claim 10, **characterized in that** the propagation direction of the undulated structure extends parallel to a propagation plane (E), the propagation plane (E) being spanned by the main light input direction (L1) and the main light deflection direction (L2), the propagation plane (E) preferably being a vertical plane, which is normal with respect to the main light outcoupling direction (L3).

12. The illumination device according to claim 10 or 11, **characterized in that** the undulated structure, in cutting planes (SE) that are parallel to one another, follows an identical course, preferably over the entire at least one reflection surface (101, 102), the cutting planes (SE) being parallel to the propagation plane (E), for example.

13. The illumination device according to either claim 10 or 12, **characterized in that** the value of the amplitudes (A) of the undulated structure (101', 102') in relation to a support curve (TK) located in a cutting plane (SE) is constant across the entire undulated structure, which is to say along the entire suport curve (TK), the value of the amplitudes (A) preferably being 0.05 mm.

14. The illumination device according to any one of claims 10 to 13, **characterized in that** the wavelength (LA) of the undulated structure is constant across the entire support curve (TK), and/or the wavelength (LA) of the undulated structure is in a range of 0.25 mm to 1.5 mm, for example is 1 mm.

15. The illumination device according to any one of claims 10 to 14, **characterized in that** the wave structure has a periodic structure.

16. The illumination device according to any one of claims 10 to 15, **characterized in that** amplitude/wavelength ≤ 0.05 applies.

17. The illumination device according to any one of claims 13 to 16, **characterized in that** the support curves (TK) are designed as straight lines or in a curved manner, and preferably in a convexly curved manner.

18. The illumination device according to claim 17, **characterized in that** the support curves (TK) are parabolas, and the focus (F) of a parabola (TK) is preferably approximately in the region of the lower face of the at least one light guide (4) of the light guide system (1).

19. The illumination device according to any one of claims 6 to 18, **characterized in that** the envelope of the amplitudes of the wave structure has the shape of a damped oscillation, the amplitude located closest to the light input region (3a) preferably being the maximum amplitude.

20. The illumination device according to any one of claims 1 to 19, **characterized in that** the deflection unit (100) comprises two reflection surfaces (101, 102) for deflecting the incoupled light, preferably in two essentially opposite directions (L2).

21. The illumination device according to any one of claims 1 to 20, **characterized in that** the deflection unit (100) is designed as a cavity in the light guide (4).

22. The illumination device according to any one of claims 1 to 21, **characterized in that** the deflection unit (100) is designed as a recess in the light guide (4).

23. A vehicle headlight comprising at least one illumination device according to any one of claims 1 to 22.

**Revendications**

1. Dispositif d'éclairage pour un véhicule, en particulier pour un véhicule automobile, comportant au moins une source de lumière et au moins un dispositif guide de lumière (1) associé à ladite au moins une source de lumière pour le guidage de la lumière émise par ladite au moins une source de lumière et couplée dans le dispositif guide de lumière (1),
un ou plusieurs emplacements de découplage (2) pour le découplage d'au moins une partie de la lumière couplée étant prévus dans le dispositif guide de lumière (1) ; et un dispositif de déviation (100) étant associé pour la déviation de la lumière couplée vers le ou les emplacements de découplage (2) du dispositif guide de lumière (1),
lequel dispositif de déviation (100) dévie la lumière couplée dans une direction principale d'injection de lumière (L1) par réflexion sur au moins une surface de réflexion (101, 102) du dispositif de déviation (100) dans au moins une direction principale de déviation de lumière (L2, L2'),
le dispositif de déviation (100) présentant au moins une structure (110) déviant la lumière vers l'avant, c'est-à-dire en direction d'une direction de découplage de lumière (L3)
**caractérisé par le fait que**
ladite au moins une structure (110) déviant la lumière est formée d'une surface (111), laquelle présente au moins une, de préférence au moins deux rainures longitudinales (110'),
la surface (111) étant une surface de délimitation opposée à ladite au moins une région de découplage de lumière (2), arrière, dudit au moins un guide de lumière (4) dans la région du dispositif de déviation (100), une surface virtuelle (111'), enveloppant les rainures (110'), étant courbée vers l'avant, dans la direction dudit au moins un emplacement de découplage de lumière (2).

**2.** Dispositif d'éclairage selon la revendication 1, **caractérisé par le fait que**, dans le cas d'au moins deux rainures longitudinales (110'), ces rainures longitudinales (110') s'étendent parallèlement entre elles.

**3.** Dispositif d'éclairage selon l'une des revendications 1 ou 2, **caractérisé par le fait que** ladite au moins une rainure longitudinale ou lesdites au moins deux rainures longitudinales (110') s'étendent parallèlement à un plan, lequel se situe perpendiculairement à la direction de découplage de lumière (L3), ou lequel est parallèle à un plan, lequel est défini par la direction principale d'injection de lumière (L1) et la direction principale de déviation de lumière (L2), les rainures longitudinales (110') s'étendant de préférence en direction de guide de lumière (4) dans la région de la région d'injection de lumière (3a).

**4.** Dispositif d'éclairage selon l'une des revendications 1 à 3, **caractérisé par le fait que** les rainures longitudinales (110') s'étendent perpendiculairement à la direction principale d'injection de lumière (L1) et/ou dans la direction de la direction principale de déviation de lumière (L2).

**5.** Dispositif d'éclairage selon l'une des revendications 1 à 4, **caractérisé par le fait que** le contour de la surface enveloppante (111') représente un cercle partiel dans des coupes verticales, par exemple dans des coupes verticales perpendiculairement à la direction de déviation de lumière (L2).

**6.** Dispositif d'éclairage selon l'une des revendications 1 à 5, **caractérisé par le fait que** ladite au moins une rainure ou lesdites au moins deux rainures (110') sont réalisées sous la forme de renfoncements dans la surface (111), un renfoncement formant une rainure (110') étant par exemple délimité à chaque fois par deux bossages, lesquels s'élèvent dans une direction s'écartant de l'emplacement de découplage de lumière (2).

**7.** Dispositif d'éclairage selon la revendication 6, **caractérisé par le fait que** les bossages forment le contour d'un cercle partiel dans des coupes qui s'étendent dans un plan, lequel se situe perpendiculairement à la direction principale de déviation de lumière (L2) ou sur l'axe longitudinal du guide de lumière (4) dans la région de l'emplacement de couplage de lumière (3a), des cercles partiels voisins se coupant dans la surface virtuelle (111'), et le rayon de courbure du cercle partiel se situant de préférence dans une plage de 0,25 mm à 0,75 mm, s'élevant par exemple à 0,5 mm.

**8.** Dispositif d'éclairage selon l'une des revendications 1 à 7, **caractérisé par le fait que** ladite au moins une rainure (110') s'étend, dans le cas d'un dispositif de déviation (100), lequel présente deux surfaces de réflexion (101, 102) pour la déviation de la lumière couplée dans deux directions (L2) sensiblement opposées, d'une surface de réflexion (101) jusqu'à l'autre surface de réflexion (102), la surface (111) présentant au moins une rainure (110') s'étendant de préférence de l'une (101) des surfaces de réflexion jusqu'à l'autre surface de réflexion (102).

**9.** Dispositif d'éclairage selon l'une des revendications 1 à 8, **caractérisé par le fait que** ladite au moins une surface de réflexion (101, 102) comporte au moins deux surfaces partielles de réflexion (102a, 102b, 102c),
des rayons lumineux parallèles (S1-S7) d'un faisceau lumineux frappant la surface de réflexion (101, 102)
au moins dans une projection dans un plan de propagation (E), lequel est défini par la direction principale d'injection de lumière (L1) et la direction principale de déviation de lumière (L2, L2') associée à ladite au moins une surface de réflexion (101, 102), étant réfléchis de façon divergente (S1', S2', S3') dans une ou plusieurs premières surfaces partielles de réflexion (102'b) et
étant réfléchis de façon convergente (S4', S5', S6', S7') dans une ou plusieurs secondes surfaces partielles de réflexion (102'a, 102'c), les surfaces partielles de réflexion (102'a, 102'b, 102'c) étant disposées et/ou réalisées de telle sorte que des directions de rayonnement convergentes et divergentes des rayons réfléchis se présentent de façon alternée et de préférence varient de façon périodique.

**10.** Dispositif d'éclairage selon la revendication 9, **caractérisé par le fait que** ladite au moins une surface de réflexion (101, 102) présente une structure ondulée ou est formée par une structure ondulée, la structure ondulée de ladite au moins une surface de réflexion (101, 102) de préférence s'élargissant à distance à partir d'une région d'injection de lumière (3a), sur laquelle de la lumière de ladite au moins une source de lumière est injectée dans au moins un guide de lumière (4) du dispositif guide de lumière (1).

**11.** Dispositif d'éclairage selon la revendication 10, **caractérisé par le fait que** la direction d'élargissement de la structure ondulée s'étend parallèlement à un plan d'élargissement (E), lequel plan d'élargissement (E) est défini par la direction principale d'injection de lumière (L1) et la direction principale de déviation de lumière (L2), le plan d'élargissement (E) étant de préférence un plan vertical, lequel se trouve perpendiculaire à la direction principale de découplage de lumière (L3).

**12.** Dispositif d'éclairage selon l'une des revendications 10 ou 11, **caractérisé par le fait que** la structure ondulée présente une allure identique dans des plans de coupe (SE) parallèles entre eux, de préférence sur ladite au moins une surface de réflexion totale (101, 102), les plans de coupe (SE) s'étendant par exemple parallèlement au plan d'élargissement (E).

**13.** Dispositif d'éclairage selon l'une des revendications 10 ou 12, **caractérisé par le fait que** la valeur des amplitudes (A) de la structure ondulée (101', 102') est constante en ce qui concerne une courbe de support (TK), laquelle s'étend dans un plan de coupe (SE), sur la structure ondulée totale, c'est-à-dire le long de la courbe de support totale (TK), la valeur des amplitudes (A) de préférence s'élevant à 0,05 mm.

**14.** Dispositif d'éclairage selon l'une des revendications 10 à 13, **caractérisé par le fait que** la longueur d'onde (LA) de la structure ondulée est constante sur toute la courbe de support (TK), et/ou la longueur d'onde (LA) de la structure ondulée se situe dans une plage de 0,25 mm à 1,5 mm, s'élevant par exemple à 1 mm.

**15.** Dispositif d'éclairage selon l'une des revendications 10 à 14, **caractérisé par le fait que** la structure ondulée présente une structure périodique.

**16.** Dispositif d'éclairage selon l'une des revendications 10 à 15, **caractérisé par le fait que** le rapport amplitude/longueur d'onde est ≤ 0,05.

**17.** Dispositif d'éclairage selon l'une des revendications 13 à 16, **caractérisé par le fait que** les courbes de support (TK) sont réalisées sous forme de droites ou sont incurvées, de préférence incurvées de façon convexe.

**18.** Dispositif d'éclairage selon la revendication 17, **caractérisé par le fait que** les courbes de support (TK) sont des paraboles, et, de préférence, le point focal (F) d'une parabole (TK) se situe à peu près dans la région du côté inférieur dudit au moins un guide de lumière (4) du dispositif guide de lumière (1).

**19.** Dispositif d'éclairage selon l'une des revendications 6 à 18, **caractérisé par le fait que** l'enveloppe des amplitudes de la structure ondulée présente la forme d'une oscillation amortie, l'amplitude la plus proche de la zone d'injection de lumière (3a) étant de préférence l'amplitude maximale.

**20.** Dispositif d'éclairage selon l'une des revendications 1 à 19, **caractérisé par le fait que** le dispositif de déviation (100) présente deux surfaces de réflexion (101, 102) pour la déviation de la lumière couplée, de préférence dans deux directions (L2) sensiblement opposées.

**21.** Dispositif d'éclairage selon l'une des revendications 1 à 20, **caractérisé par le fait que** le dispositif de déviation (100) est réalisé sous la forme d'un évidement dans le guide de lumière (4).

**22.** Dispositif d'éclairage selon l'une des revendications 1 à 21, **caractérisé par le fait que** le dispositif de déviation (100) est réalisé sous la forme d'un creux dans le guide de lumière (4).

**23.** Phare de véhicule ayant au moins un dispositif d'éclairage selon l'une des revendications 1 à 22.

Fig.1

Fig.2

Fig.3

Fig.4

Fig.5

Fig.6

Fig.7a

Fig.7b

*Fig.8a*

*Fig.8b*

Fig.9a

Fig.9b

*Fig.10a*

*Fig.10b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10158336 B4
- US 20070159846 A